# EUROPÄISCHE PATENTSCHRIFT

(11) **EP 2 655 933 B1**
(45) Veröffentlichungstag und Bekanntmachung des Hinweises auf die Patenterteilung: **24.12.2014**
(21) Anmeldenummer: 11785415.8
(22) Anmeldetag: 21.11.2011
(51) Int. Cl.: F16H 3/62, F16H 3/44, F16H 3/66

(54) **MEHRSTUFENGETRIEBE IN PLANETENBAUWEISE**
MULTISTEP GEAR MECHANISM OF PLANETARY DESIGN
BOÎTE DE VITESSES MULTIÉTAGÉE DANS UNE STRUCTURE À TRAINS PLANÉTAIRES

(30) Priorität: 21.12.2010 DE 102010063632
(43) Veröffentlichungstag der Anmeldung: 30.10.2013
(73) Patentinhaber: ZF Friedrichshafen AG, 88038 Friedrichshafen (DE)
(72) Erfinder: GUMPOLTSBERGER, Gerhard, 88048 Friedrichshafen (DE); WAFZIG, Jürgen, 88097 Eriskirch (DE); SIBLA, Christian, 88045 Friedrichshafen (DE); BECK, Stefan, 88097 Eriskirch (DE); WECHS, Michael, 88138 Sigmarszell (DE)
(86) Internationale Anmeldenummer: PCT/EP2011/070519
(87) Internationale Veröffentlichungsnummer: WO 2012/084375

(56) Entgegenhaltungen:
- US-A1- 2005 215 386
- US-A1- 2009 017 965
- US-A1- 2009 054 194

## Beschreibung

Die Erfindung betrifft ein Mehrstufengetriebe in Planetenbauweise, insbesondere für ein Kraftfahrzeug, mit einem Gehäuse, in welchem acht drehbare Wellen und vier Planetensätze aufgenommen sind, und mindestens sechs Schaltelementen, welche durch mindestens eine Bremse und Kupplungen gebildet sind und mittels deren gezielter Betätigung verschiedene Übersetzungsverhältnisse zwischen einer Antriebs- und einer Abtriebswelle darstellbar sind.

Derartige Mehrstufengetriebe kommen vorzugsweise bei Automatikgetrieben von Kraftfahrzeugen zum Einsatz, wobei der wirksame Leistungsfluss über die Planetensätze in der jeweiligen Gangstufe durch eine gezielte Betätigung der Schaltelemente definiert wird. Dabei ist den Planetensätzen bei einem Automatikgetriebe üblicherweise zudem ein einer Schlupfwirkung unterliegendes und wahlweise mit einer Überbrückungskupplung versehenes Anfahrelement vorgeschaltet, wie beispielsweise etwa einem hydrodynamischen Drehmomentwandler oder einer Strömungskupplung.

Aus der DE 10 2008 000 428 A1 ist ein Mehrstufengetriebe in Planetenbauweise bekannt, bei welchem in einem Gehäuse vier Planetensätze, sowie insgesamt acht drehbare Wellen angeordnet sind, von denen eine die Antriebswelle und eine andere die Abtriebswelle des Mehrstufengetriebes darstellt. Des Weiteren sind im Bereich der Wellen mindestens sechs Schaltelemente vorgesehen, mittels deren gezielter Betätigung der Leistungsfluss über die vier Planetensätze variiert und damit verschiedene Übersetzungsverhältnisse zwischen der Antriebs- und der Abtriebswelle definierbar sind. Insgesamt sind hierdurch neun Vorwärtsgänge, sowie ein Rückwärtsgang schaltbar.

Weitere Mehrstufengetriebe sind beispielsweise aus der US 2009/0017965A1 bekannt.

Es ist die Aufgabe der vorliegenden Erfindung, ein Mehrstufengetriebe der eingangs genannten Art vorzuschlagen, mittels welchem mindestens neun Vorwärtsgänge und ein Rückwärtsgang darstellbar sind und bei dem insbesondere der Bauaufwand hinsichtlich des Gewichts und des Herstellungsaufwands minimiert ist. Zudem soll sich eine gute Übersetzungsreihe darstellen lassen, sowie Belastungen der einzelnen Getriebeelemente minimiert sein. Schließlich sollen hohe Verzahnungswirkungsgrade erreichbar sein.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben dabei jeweils vorteilhafte Weiterbildungen der Erfindung wieder.

Demnach wird ein erfindungsgemäßes Mehrstufengetriebe in Planetenbauweise vorgeschlagen, welches in einem Gehäuse eine Antriebs- und eine Abtriebswelle, sowie weitere sechs drehbare Wellen und vier Planetensätze aufnimmt. Die Planetensätze sind dabei in axialer Richtung betrachtet in der Reihenfolge erster Planetensatz, zweiter Planetensatz, dritter Planetensatz und vierter Planetensatz angeordnet, wobei jeder Planetensatz vorzugsweise als Minus-Planetensatz ausgebildet ist. Es ist jedoch ebenso denkbar, an Stellen, wo es die Bindbarkeit zulässt, einzelne oder mehrere der Minus-Planetensätze in Plus-Planetensätze umzuwandeln, wenn gleichzeitig eine Steg- und eine Hohlradanbindung getauscht und der Betrag der Standübersetzung um Eins erhöht wird.

Bekanntlich umfasst ein einfacher Minus-Planetensatz ein Sonnenrad, ein Hohlrad und einen Steg, welcher Planetenräder drehbar gelagert trägt, die jeweils mit dem Sonnenrad und dem Hohlrad kämmen. Bei festgesetztem Steg wird dabei eine zum Sonnenrad entgegengesetzte Drehrichtung des Hohlrades erreicht.

Im Gegensatz hierzu umfasst ein einfacher Plus-Planetensatz ein Sonnenrad, ein Hohlrad und einen Steg, welcher innere und äußere Planetenräder drehbar gelagert trägt. Dabei kämmen alle inneren Planetenräder mit dem Sonnenrad und alle äußeren Planetenräder mit dem Hohlrad, wobei zudem jedes innere Planetenrad mit jeweils einem äußeren Planetenrad in Eingriff steht. Bei einem Festsetzen des Steges wird dabei eine gleiche Drehrichtung des Hohlrades gegenüber dem Sonnenrad erreicht.

Gemäß der Erfindung ist ein Steg eines ersten Planetensatzes mit einer dritten Welle verbunden, welche über eine erste Bremse am Gehäuse festgesetzt und ferner mittels einer ersten Kupplung mit einer vierten Welle verbunden werden kann. Die vierte Welle ist des Weiteren mit einem Hohlrad eines dritten Planetensatzes gekoppelt, wobei eine fünfte Welle ein Hohlrad eines zweiten Planetensatzes mit einem Sonnenrad des dritten Planetensatzes verbindet und zudem über eine zweite Kupplung mit der Abtriebswelle gekoppelt werden kann. Zudem ist eine sechste Welle mit einem Hohlrad des ersten Planetensatzes verbunden und die Antriebswelle über eine dritte Kupplung mit der dritten Welle verbindbar, sowie mit einem Steg des zweiten Planetensatzes gekoppelt.

Entsprechend einer Ausführungsform der Erfindung ist die sechste Welle zudem mit einem Sonnenrad des zweiten Planetensatzes und einem Steg des dritten Planetensatzes verbunden. Des Weiteren ist ein Sonnenrad des ersten Planetensatzes mit einer siebten Welle gekoppelt, die mittels einer zweiten Bremse am Gehäuse festgesetzt werden kann.

In Weiterbildung dieser Ausführung ist die vierte Welle zudem mit einem Sonnenrad eines vierten Planetensatzes verbunden, während ein Hohlrad dieses vierten Planetensatzes mit einer achten Welle gekoppelt ist, die über eine dritte Bremse am Gehäuse festsetzbar ist. Schließlich ist die Abtriebswelle des Weiteren mit einem Steg des vierten Planetensatzes gekoppelt.

In diesem Fall ergibt sich ein erster Vorwärtsgang durch Schließen der zweiten und dritten Bremse, sowie der ersten Kupplung, wohingegen ein zweiter Vorwärtsgang durch Betätigen der dritten Bremse, sowie der ersten und dritten Kupplung geschaltet wird. Ein dritter Vorwärtsgang ist durch Schließen der zweiten und dritten Bremse, sowie der dritten Kupplung wählbar. Des Weiteren ergibt sich ein vierter Vorwärtsgang durch Betätigen der dritten Bremse, sowie der zweiten und dritten Kupplung, ein fünfter Vorwärtsgang durch Schließen der zweiten Bremse, sowie der zweiten und dritten Kupplung. Ein sechster Vorwärtsgang wird durch Betätigen sämtlicher Kupplungen geschaltet, ein siebter Vorwärtsgang ist durch Schließen der zweiten Bremse, sowie der ersten und zweiten Kupplung wählbar. Ferner ergibt sich ein achter Vorwärtsgang durch Betätigen der ersten Bremse, sowie der ersten und zweiten Kupplung, wohingegen ein neunter Vorwärtsgang durch Schließen der ersten und zweiten Bremse, sowie der zweiten Kupplung geschaltet wird. Schließlich ergibt sich ein Rückwärtsgang durch Schließen sämtlicher Bremsen.

Gemäß einer alternativen Weiterbildung dieser Ausführung ist die vierte Welle zudem mit einem Sonnenrad eines vierten Planetensatzes verbunden, während die Abtriebswelle ferner über eine vierte Kupplung mit einer achten Welle verbunden werden kann, die mit einem Steg des vierten Planetensatzes gekoppelt ist. Schließlich ist ein Hohlrad des vierten Planetensatzes drehfest mit dem Gehäuse verbunden.

Im Falle einer derartigen Ausgestaltung ergibt sich ein erster Vorwärtsgang durch Schließen der zweiten Bremse, sowie der ersten und vierten Kupplung, wohingegen ein zweiter Vorwärtsgang durch Betätigen der ersten, dritten und vierten Kupplung geschaltet wird. Ein dritter Vorwärtsgang ist durch Schließen der zweiten Bremse, sowie der dritten und vierten Kupplung wählbar. Des Weiteren ergibt sich ein vierter Vorwärtsgang durch Betätigen der zweiten, dritten und vierten Kupplung, ein fünfter Vorwärtsgang durch Schließen der zweiten Bremse, sowie der zweiten und dritten Kupplung. Ein sechster Vorwärtsgang wird durch Betätigen der ersten, zweiten und dritten Kupplung geschaltet, ein siebter Vorwärtsgang ist durch Schließen der zweiten Bremse, sowie der ersten und zweiten Kupplung wählbar. Ferner ergibt sich ein achter Vorwärtsgang durch Betätigen der ersten Bremse, sowie der ersten und zweiten Kupplung, wohingegen ein neunter Vorwärtsgang durch Schließen sämtlicher Bremsen und der zweiten Kupplung geschaltet wird. Schließlich ergibt sich ein Rückwärtsgang durch Schließen sämtlicher Bremsen und der vierten Kupplung.

Entsprechend einer weiteren Ausführungsform der Erfindung ist vorgesehen, dass die vierte Welle ferner mittels einer vierten Kupplung mit einer achten Welle lösbar verbunden werden kann, welche mit einem Sonnenrad eines vierten Planetensatzes gekoppelt ist, dessen Steg mit der Abtriebswelle und dessen Hohlrad drehfest mit dem Gehäuse verbunden ist.

Im Falle dieser Ausführungsform ergibt sich ein erster Vorwärtsgang durch Schließen der zweiten Bremse, sowie der ersten und vierten Kupplung, wohingegen ein zweiter Vorwärtsgang durch Betätigen der ersten, dritten und vierten Kupplung geschaltet wird. Ein dritter Vorwärtsgang ist durch Schließen der zweiten Bremse, sowie der dritten und vierten Kupplung wählbar. Des Weiteren ergibt sich ein vierter Vorwärtsgang durch Betätigen der zweiten, dritten und vierten Kupplung, ein fünfter Vorwärtsgang durch Schließen der zweiten Bremse, sowie der zweiten und dritten Kupplung. Zudem wird ein sechster Vorwärtsgang durch Betätigen der ersten, zweiten und dritten Kupplung geschaltet, ein siebter Vorwärtsgang ist durch Schließen der zweiten Bremse, sowie der ersten und zweiten Kupplung wählbar. Ferner ergibt sich ein achter Vorwärtsgang durch Betätigen der ersten Bremse, sowie der ersten und zweiten Kupplung, wohingegen ein neunter Vorwärtsgang durch Schließen sämtlicher Bremsen, sowie der zweiten Kupplung geschaltet wird. Schließlich ergibt sich ein Rückwärtsgang durch Schließen sämtlicher Bremsen und der vierten Kupplung.

Gemäß einer alternativen Ausführungsform der Erfindung ist die sechste Welle zudem mittels einer vierten Kupplung mit einer siebten Welle verbindbar, die des Weiteren ein Sonnenrad des zweiten Planetensatzes mit einem Steg des dritten Planetensatzes verbindet. Ferner ist ein Sonnenrad des ersten Planetensatzes drehfest mit dem Gehäuse gekoppelt.

In Weiterbildung dieser Ausführung ist die vierte Welle ferner mit einem Sonnenrad eines vierten Planetensatzes verbunden, wobei ein Steg dieses vierten Planetensatzes mit der Abtriebswelle und ein Hohlrad des vierten Planetensatzes mit einer achten Welle gekoppelt ist, die über eine zweite Bremse am Gehäuse festsetzbar ist.

In diesem Fall ergibt sich ein erster Vorwärtsgang durch Schließen der zweiten Bremse, sowie der ersten und vierten Kupplung, wohingegen ein zweiter Vorwärtsgang durch Betätigen der zweiten Bremse, sowie der ersten und dritten Kupplung geschaltet wird. Ein dritter Vorwärtsgang ist durch Schließen der zweiten Bremse, sowie der dritten und vierten Kupplung wählbar. Des Weiteren ergibt sich ein vierter Vorwärtsgang durch Betätigen der zweiten Bremse, sowie der zweiten und dritten Kupplung, ein fünfter Vorwärtsgang durch Schließen der zweiten, dritten und vierten Kupplung. Zudem wird ein sechster Vorwärtsgang durch Betätigen der ersten, zweiten und dritten Kupplung geschaltet, ein siebter Vorwärtsgang ist durch Schließen der ersten, zweiten und vierten Kupplung wählbar. Ferner ergibt sich ein achter Vorwärtsgang durch Betätigen der ersten Bremse, sowie der ersten und zweiten Kupplung, wohingegen ein neunter Vorwärtsgang durch Schließen der ersten Bremse, sowie der zweiten und vierten Kupplung geschaltet wird. Schließlich ergibt sich ein Rückwärtsgang durch Schließen sämtlicher Bremsen, sowie der vierten Kupplung.

Entsprechend einer weiteren Ausführungsform der Erfindung ist die vierte Welle ferner mit einem Sonnenrad eines vierten Planetensatzes verbunden, wobei ein Steg dieses vierten Planetensatzes mit einer achten Welle gekoppelt ist, die über eine fünfte Kupplung mit der Abtriebswelle verbunden werden kann. Schließlich ist ein Hohlrad des vierten Planetensatzes drehfest mit dem Gehäuse gekoppelt.

Im Falle dieser Ausführungsform ergibt sich ein erster Vorwärtsgang durch Schließen der ersten, vierten und fünften Kupplung, ein sich diesem anschließender, zweiter Vorwärtsgang wird durch Betätigen der ersten, dritten und fünften Kupplung geschaltet. Ein weiterer, dritter Vorwärtsgang ist durch Schließen der dritten, vierten und fünften Kupplung wählbar. Des Weiteren ergibt sich ein vierter Vorwärtsgang durch Betätigen der zweiten, dritten und fünften Kupplung, ein fünfter Vorwärtsgang durch Schließen der zweiten, dritten und vierten Kupplung. Zudem wird ein sechster Vorwärtsgang durch Betätigen der ersten, zweiten und dritten Kupplung geschaltet, ein siebter Vorwärtsgang ist durch Schließen der ersten, zweiten und vierten Kupplung wählbar. Ferner ergibt sich ein achter Vorwärtsgang durch Betätigen der ersten Bremse, sowie der ersten und zweiten Kupplung, wohingegen ein neunter Vorwärtsgang durch Schließen der ersten Bremse, sowie der zweiten und vierten Kupplung geschaltet wird. Schließlich ergibt sich ein Rückwärtsgang durch Schließen der ersten Bremse, sowie der vierten und fünften Kupplung.

Gemäß einer weiteren Ausführung eines erfindungsgemäßen Mehrstufengetriebes kann die vierter Welle ferner mittels einer fünften Kupplung mit einer achten Welle verbunden werden, die mit einem Sonnenrad eines vierten Planetensatzes gekoppelt ist, wobei ein Steg dieses vierten Planetensatzes mit der Abtriebswelle und ein Hohlrad des vierten Planetensatzes drehfest mit dem Gehäuse verbunden ist.

In diesem Fall ergibt sich ein erster Vorwärtsgang durch Schließen der ersten, vierten und fünften Kupplung, wohingegen ein zweiter Vorwärtsgang durch Betätigen der ersten, dritten und fünften Kupplung gewählt wird. Ein darauf folgender, dritter Vorwärtsgang wird durch Schließen der dritten, vierten und fünften Kupplung geschaltet. Des Weiteren ergibt sich ein vierter Vorwärtsgang durch Betätigen der zweiten, dritten und fünften Kupplung, ein fünfter Vorwärtsgang durch Schließen der zweiten, dritten und vierten Kupplung. Ein sechster Vorwärtsgang wird durch Betätigen der ersten, zweiten und dritten Kupplung geschaltet, ein siebter Vorwärtsgang ist durch Schließen der ersten, zweiten und vierten Kupplung wählbar. Ferner ergibt sich ein achter Vorwärtsgang durch Betätigen der ersten Bremse, sowie der ersten und zweiten Kupplung, wohingegen ein neunter Vorwärtsgang durch Schließen der ersten Bremse, sowie der zweiten und vierten Kupplung geschaltet wird. Schließlich ergibt sich ein Rückwärtsgang durch Schließen der ersten Bremse, sowie der vierten und fünften Kupplung.

Mittels der erfindungsgemäßen Ausgestaltung eines Mehrstufengetriebes ist es möglich, die insgesamt zehn wählbaren Gänge mit einer niedrigen Anzahl an Bauteilen zu realisieren und somit den Herstellungsaufwand und das Gewicht gering zu halten. Zudem ergeben sich insbesondere für Personenkraftwagen geeignete Übersetzungen und eine erhöhte Gesamtspreizung des Mehrstufengetriebes, was zu einer Steigerung des Fahrkomforts und einer Absenkung des Kraftstoffverbrauchs führt.

Ferner zeichnet sich ein erfindungsgemäßes Mehrstufengetriebe durch niedrige Absolut- und Relativdrehzahlen, sowie niedrige Planetensatz- und Schaltelementmomente aus, was sich auf deren Dimensionierung und ihre Lebensdauer positiv auswirkt. Insgesamt lassen sich zudem eine gute, insbesondere leicht progressive Übersetzungsreihe, und gute Verzahnungswirkungsgrade erreichen.

Weitere, die Erfindung verbessernde Maßnahmen werden nachstehend gemeinsam mit der Beschreibung bevorzugter Ausführungsformen der Erfindung näher dargestellt. Es zeigt:
- Fig. 1: eine schematische Ansicht einer ersten bevorzugten Ausführungsform eines erfindungsgemäßen Mehrstufengetriebes;
- Fig. 2: ein beispielhaftes Schaltschema für ein Mehrstufengetriebe gemäß Fig. 1;
- Fig. 3: eine schematische Ansicht einer zweiten bevorzugten Ausführungsform eines erfindungsgemäßen Mehrstufengetriebes;
- Fig. 4: eine schematische Ansicht einer weiteren, dritten bevorzugten Ausführungsform eines erfindungsgemäßen Mehrstufengetriebes;
- Fig. 5: eine schematische Ansicht einer weiteren, vierten bevorzugten Ausführung eines erfindungsgemäßen Mehrstufengetriebes;
- Fig. 6: eine schematische Ansicht einer fünften bevorzugten Ausführungsform der Erfindung; und
- Fig. 7: eine schematische Ansicht einer sechsten bevorzugten Ausführungsform eines erfindungsgemäßen Mehrstufengetriebes.

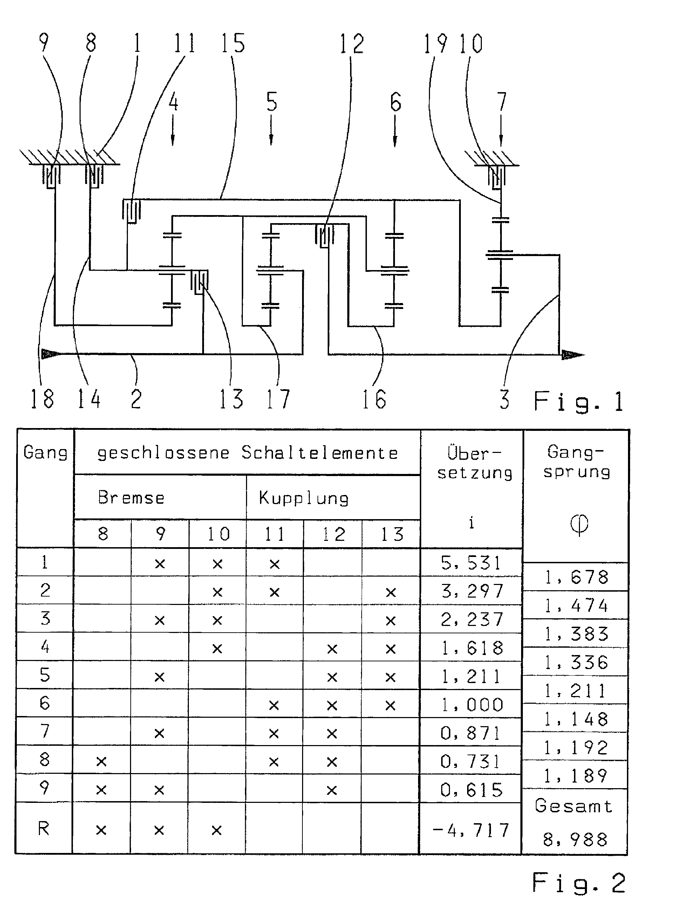

In Fig. 1 ist eine schematische Ansicht einer ersten Ausführungsform des erfindungsgemäßen Mehrstufengetriebes dargestellt, bei welchem in einem Gehäuse 1 eine Antriebswelle 2, eine Abtriebswelle 3, sowie vier Planetensätze 4, 5, 6 und 7 aufgenommen sind. Dabei sind die Planetensätze 4, 5, 6 und 7 als Minus-Planetensätze ausgebildet, wobei jedoch ebenso denkbar ist, zumindest einen der Planetensätze 4, 5, 6 und 7 als Plus-Planetensatz auszuführen, wenn gleichzeitig eine jeweilige Steg- und eine Hohlradanbindung getauscht und der Betrag der Standübersetzung im Vergleich zu der Ausführung als Minus-Planetensatz um eins erhöht wird.

Wie des Weiteren aus Fig. 1 hervorgeht, umfasst das erfindungsgemäße Mehrstufengetriebe zudem insgesamt sechs Schaltelemente, nämlich drei Bremsen 8, 9 und 10, sowie drei Kupplungen 11, 12 und 13, welche jeweils als Lamellenschaltelemente ausgebildet sind. Eine räumliche Anordnung dieser Schaltelemente kann dabei beliebig sein und wird nur durch deren Abmessungen sowie die äußere Formgebung begrenzt. Zudem ist auch eine Ausführung als Klauenschaltelemente denkbar.

Mittels einer gezielten Betätigung der Schaltelemente lassen sich zwischen der Antriebswelle 2 und der Abtriebswelle 3 insgesamt neun Vorwärtsgänge und ein Rückwärtsgang darstellen, indem der Leistungsfluss über die vier Planetensätze 4, 5, 6 und 7 variiert wird.

Das erfindungsgemäße Mehrstufengetriebe weist des Weiteren insgesamt acht drehbare Wellen auf, welche neben der Antriebswelle 2 und der Abtriebswelle 3 eine dritte Welle 14, eine vierte Welle 15, eine fünfte Welle 16, eine sechste Welle 17, eine siebte Welle 18 und eine achte Welle 19 sind.

Wie nun des Weiteren aus Fig. 1 ersichtlich ist, ist die dritte Welle 14 mit einem Steg des ersten Planetensatzes 4 gekoppelt und kann zudem über die erste Bremse 8 am Gehäuse 1 festgesetzt werden. Des Weiteren ist die dritte Welle 14 über die erste Kupplung 11 mit der vierten Welle 15 lösbar verbindbar, die im weiteren Verlauf ein Hohlrad des dritten Planetensatzes 6 mit einem Sonnenrad des vierten Planetensatzes 7 verbindet.

Die fünfte Welle 16 ist mit einem Hohlrad des zweiten Planetensatzes 5 und einem Sonnenrad des dritten Planetensatzes 6 verbunden und kann zudem mittels der zweiten Kupplung 12 mit der Abtriebswelle 3 verbunden werden, die zudem mit einem Steg des vierten Planetensatzes 7 gekoppelt ist. Des Weiteren verbindet die sechste Welle 17 ein Hohlrad des ersten Planetensatzes 4 mit einem Sonnenrad des zweiten Planetensatzes 5 und einem Steg des dritten Planetensatzes 6.

Wie des Weiteren aus Fig. 1 hervorgeht, ist die Antriebswelle 2 mit einem Steg des zweiten Planetensatzes 5 gekoppelt und kann zudem mittels der dritten Kupplung 13 mit der dritten Welle 14 verbunden werden. Ferner ist ein Sonnenrad des ersten Planetensatzes 4 mit einer siebten Welle 18 gekoppelt, die über die zweite Bremse 9 am Gehäuse 1 festgesetzt werden kann. Schließlich steht noch ein Hohlrad des vierten Planetensatzes 7 mit einer achten Welle 19 in Wirkverbindung, die über die weitere, dritte Bremse 10 ebenfalls am Gehäuse 1 festsetzbar ist.

Aus Fig. 2 geht ein beispielhaftes Schaltschema des Mehrstufengetriebes gemäß Fig. 1 hervor. Dabei werden für jeden Gang jeweils drei der sechs Schaltelemente geschlossen und bei einem Wechsel in die benachbarten Gänge jeweils der Zustand zweier Schaltelemente variiert. Des Weiteren können dem beispielhaften Schaltschema die jeweiligen Übersetzungen i der einzelnen Gangstufen und die Stufensprünge ϕ zum jeweils nächsthöheren Gang beispielhaft entnommen werden. Auch eine Spreizung von 8,988 des Getriebes ist aus Fig. 2 ablesbar.

Im Falle des Ausführungsbeispiels nach Fig. 1 wird der erste Vorwärtsgang durch Schließen der zweiten Bremse 9 und der dritten Bremse 10, sowie der ersten Kupplung 11 dargestellt. Zum Schalten in den nächsthöheren, zweiten Vorwärtsgang ist dann die zweite Bremse 9 zu öffnen und die dritte Kupplung 13 zu schließen. Ausgehend vom zweiten Vorwärtsgang ist der dritte Vorwärtsgang durch Öffnen der ersten Kupplung 11 und Schließen der zweiten Bremse 9 zu schalten. Zum Hochschalten in den vierten Vorwärtsgang ist dann die zweite Bremse 9 wiederum zu öffnen und die zweite Kupplung 12 zu betätigen. Ausgehend vom vierten Vorwärtsgang ist zum Wählen des fünften Vorwärtsganges die dritte Bremse 10 zu öffnen und die zweite Bremse 9 zu betätigen, während zu einem weiteren Hochschalten in den sechsten Vorwärtsgang die zweite Bremse 9 wiederum zu öffnen und die erste Kupplung 11 zu schließen ist. Zum Schalten des siebten Vorwärtsganges ist dann die dritte Kupplung 13 zu öffnen und die zweite Bremse 9 zu betätigen, wohingegen zum Wählen des achten Vorwärtsganges die zweite Bremse 9 wiederum zu öffnen und die erste Bremse 8 zu schließen ist. Schließlich ist zum Hochschalten in den neunten Vorwärtsgang die erste Kupplung 11 zu öffnen und die zweite Bremse 9 zu betätigen. Der Rückwärtsgang ergibt sich hingegen durch Schließen aller drei Bremsen 8, 9 und 10.

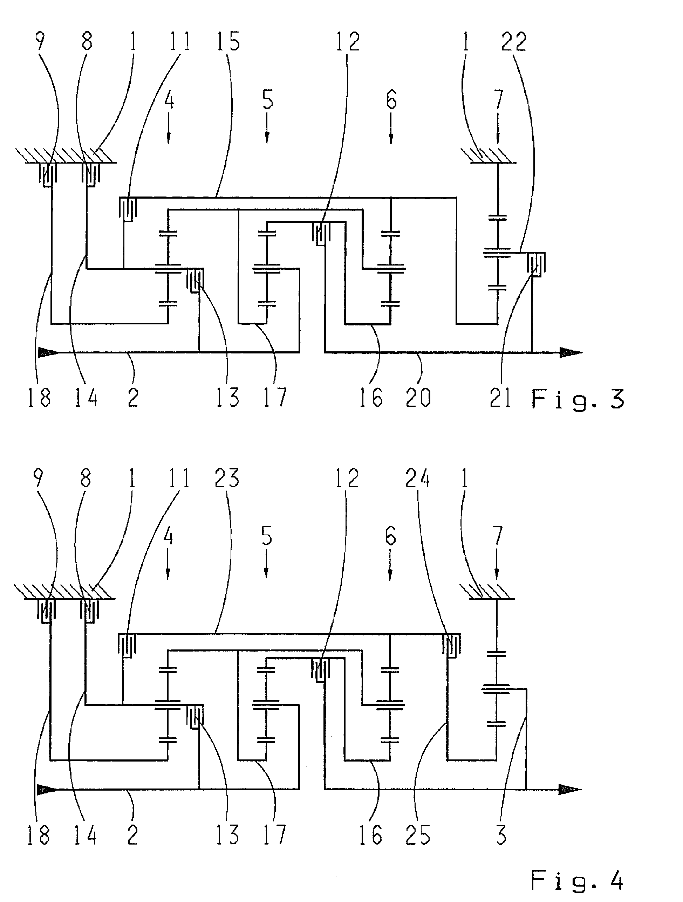

In Fig. 3 ist eine weitere, zweite bevorzugte Ausführungsform des erfindungsgemäßen Mehrstufengetriebes dargestellt. Diese unterscheidet sich von der Ausführungsform gemäß Fig. 1 dahingehend, dass eine Abtriebswelle 20 neben einer Verbindbarkeit mit der fünften Welle 16 mittels der zweiten Kupplung 12 über eine vierte Kupplung 21 mit einer achten Welle 22 gekoppelt werden kann. Diese achte Welle 22 steht dabei zudem mit einem Steg des vierten Planetensatzes 7 in Verbindung. Ferner ist ein Hohlrad des vierten Planetensatzes 7 drehfest mit dem Gehäuse 1 verbunden.

Der Aufbau gemäß der zweiten Ausführungsform nach Fig. 3 ist wirkungsgleich zur ersten Ausführungsform gemäß Fig. 1, so dass in den einzelnen Gängen die Übersetzungen i, sowie die Gangsprünge ϕ gemäß dem beispielhaften Schaltschema aus Fig. 2 erreicht werden. Auch das Schalten der einzelnen Gänge unterscheidet sich hinsichtlich der Beschreibung zu Fig. 2 nur dahingehend, dass anstelle der dritten Bremse 10 in Fig. 1 die vierte Kupplung 21 in Fig. 3 jeweils zu betätigen ist.

Des Weiteren ist in Fig. 4 eine weitere, dritte Ausführungsform des erfindungsgemäßen Mehrstufengetriebes schematisch dargestellt. Diese unterscheidet sich nun von der ersten Ausführungsform gemäß Fig. 1 dahingehend, dass eine vierte Welle 23 neben einer Verbindung mit einem Hohlrad des dritten Planetensatzes 6 und einer möglichen Koppelung über die erste Kupplung 11 mit der dritten Welle 14 mittels einer vierten Kupplung 24 mit einer achten Welle 25 verbunden werden kann. Diese achte Welle 25 ist dabei des Weiteren mit einem Sonnenrad des vierten Planetensatzes 7 gekoppelt. Schließlich ist noch ein Hohlrad des vierten Planetensatzes 7 drehfest mit dem Gehäuse 1 verbunden.

Auch im Falle der dritten Ausführungsform gemäß Fig. 4 werden wiederum die Übersetzungen i in den einzelnen Gängen, sowie die Gangsprünge ϕ zwischen den Gängen gemäß dem beispielhaften Schaltschema nach Fig. 2 erreicht. Hinsichtlich des Schaltens der einzelnen Gänge unterscheidet sich die vorliegende Variante bezüglich des Schaltschemas in Fig. 2 dahingehend, dass anstelle der dritten Bremse 10 in Fig. 1 die vierte Kupplung 24 in Fig. 4 jeweils zu betätigen ist.

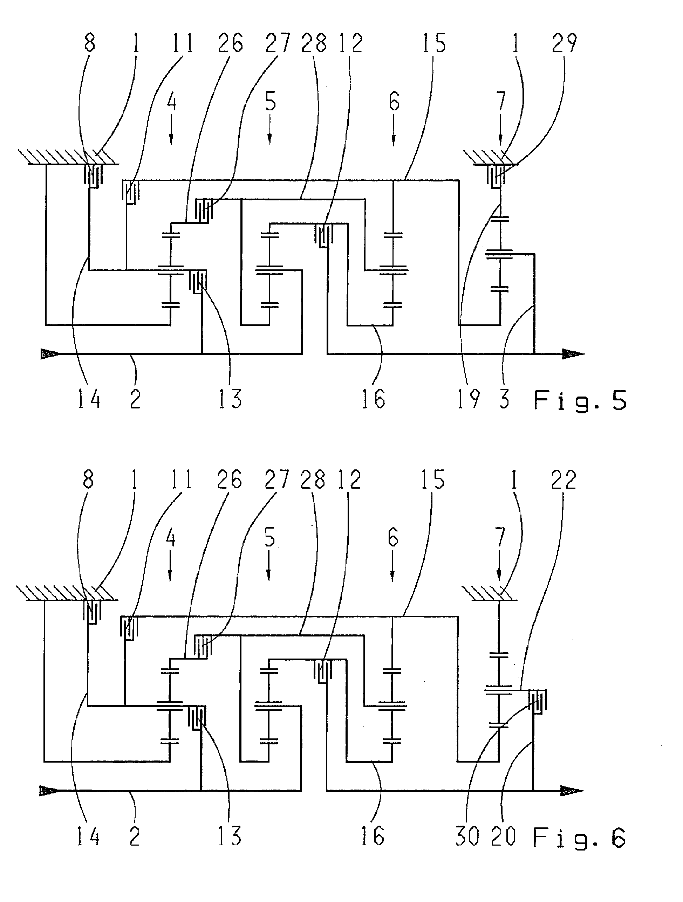

Aus Fig. 5 geht eine weitere, vierte bevorzugte Ausführungsform eines erfindungsgemäßen Mehrstufengetriebes hervor. Unterschiedlich zu der in Fig. 1 beschriebenen Variante ist dabei, dass eine sechste Welle 26 neben einer Koppelung mit einem Hohlrad des ersten Planetensatzes 4 über eine vierte Kupplung 27 mit einer siebten Welle 28 verbunden werden kann, welche dabei im weiteren Verlauf ein Sonnenrad des zweiten Planetensatzes 5 mit einem Steg des dritten Planetensatzes 6 verbindet. Des Weiteren ist die mit einem Hohlrad des vierten Planetensatzes 7 verbundene, achte Welle 19 über eine zweite Bremse 29 am Gehäuse 1 festsetzbar. Schließlich ist noch ein Sonnenrad des ersten Planetensatzes 4 drehfest mit dem Gehäuse 1 verbunden.

Die im Falle dieser Ausführungsform erreichbaren Übersetzungen i, sowie die Gangsprünge ϕ entsprechen hierbei erneut den beispielhaften Werten des Schaltschemas nach Fig. 2. Hinsichtlich einer Betätigung der Schaltelemente zum Schalten der einzelnen Gänge ist im Falle der Ausführungsform nach Fig. 5 das Schaltschema nach Fig. 2 dahingehend abzuwandeln, dass anstelle der zweiten Bremse 9 in Fig. 1 die vierte Kupplung 27 in Fig. 5 und anstelle der dritten Bremse 10 in Fig. 1 die zweite Bremse 29 in Fig. 5 jeweils zu betätigen sind.

Des Weiteren geht aus Fig. 6 eine schematische Darstellung einer weiteren, fünften bevorzugten Ausführungsform eines erfindungsgemäßen Mehrstufengetriebes hervor. Hierbei ist im Unterschied zu dem in Fig. 1 dargestellten Mehrstufengetriebe eine sechste Welle 26, wie auch schon bei der Ausführungsform nach Fig. 5, mittels einer vierten Kupplung 27 mit einer siebten Welle 28 lösbar verbindbar, wobei diese siebte Welle 28 ein Sonnenrad des zweiten Planetensatzes 5 mit einem Steg des dritten Planetensatzes 6 verbindet. Ferner kann eine Abtriebswelle 20 neben einer möglichen Ankopplung über die zweite Kupplung 12 an die fünfte Welle 16 mittels einer fünften Kupplung 30 mit einer achten Welle 22 verbunden werden, welche im weiteren Verlauf mit einem Steg des vierten Planetensatzes 7 gekoppelt ist. Schließlich sind sowohl ein Sonnenrad des ersten Planetensatzes 4 als auch ein Hohlrad des vierten Planetensatzes 7 jeweils drehfest mit dem Gehäuse 1 verbunden.

Wie auch schon in den vorherigen Fällen, entsprechen die erreichbaren Übersetzungen i und Gangsprünge ϕ der Variante nach Fig. 6 den Werten des beispielhaften Schaltschemas in Fig. 2. Zum Schalten der einzelnen Gänge ist das beispielhafte Schaltschema aus Fig. 2 nun dahingehend abzuwandeln, dass anstelle der zweiten Bremse 9 in Fig. 1 die vierte Kupplung 27 in Fig. 6 und anstelle der dritten Bremse 10 in Fig. 1 die fünfte Kupplung 30 in Fig. 6 jeweils zu betätigen sind.

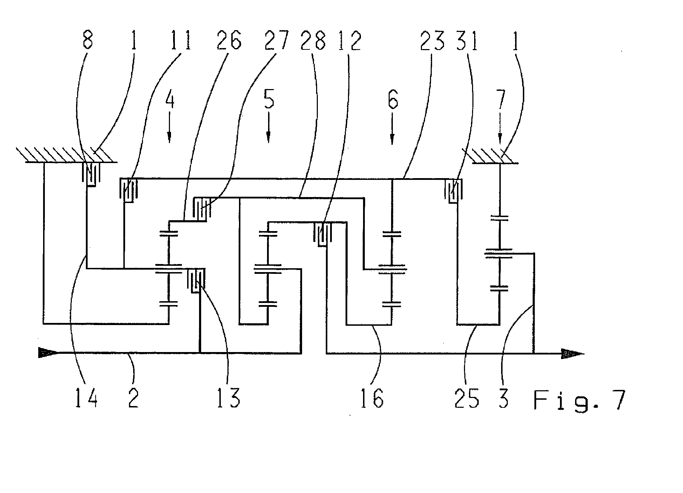

Schließlich ist in Fig. 7 eine sechste bevorzugte Ausführungsform eines erfindungsgemäßen Mehrstufengetriebes dargestellt. Diese Ausführungsform unterscheidet sich von dem Mehrstufengetriebe nach Fig. 1 dahingehend, dass eine sechste Welle 26, wie auch schon bei den Varianten nach Fig. 5 und Fig. 6, neben einer Koppelung mit einem Hohlrad des ersten Planetensatzes 4 mittels einer vierten Kupplung 27 mit einer siebten Welle 28 gekoppelt werden kann, die ein Sonnenrad des zweiten Planetensatzes 5 mit einem Steg des dritten Planetensatzes 6 verbindet. Zudem ist eine vierte Welle 23 über eine fünfte Kupplung 31 mit einer achten Welle 25 lösbar verbindbar, die zudem mit einem Sonnenrad des vierten Planetensatzes 7 gekoppelt ist. Schließlich sind sowohl ein Sonnenrad des ersten Planetensatzes 4 als auch ein Hohlrad des vierten Planetensatzes 7 jeweils drehfest mit dem Gehäuse 1 verbunden.

Die Ausführungsform nach Fig. 7 ist wirkungsgleich zu der Variante nach Fig. 1, so dass hinsichtlich der Übersetzungen i und Gangsprünge ϕ dieselben beispielhaften Werte des Schaltschemas nach Fig. 2 erreicht werden. Bezüglich einer Schaltung der einzelnen Gänge ist das Schaltschema nach Fig. 2 dahingehend abzuwandeln, dass anstelle der zweiten Bremse 9 in Fig. 1 die vierte Kupplung 27 in Fig. 7 und anstelle der dritten Bremse 10 in Fig. 1 die fünfte Kupplung 31 in Fig. 7 jeweils zu betätigen sind.

Mittels der erfindungsgemäßen Ausgestaltung eines Mehrstufengetriebes lässt sich ein Automatgetriebe mit einem niedrigen Herstellungsaufwand und geringem Gewicht erzielen. Zudem treten bei dem erfindungsgemäßen Mehrstufengetriebe niedrige Absolut- und Relativdrehzahlen, sowie niedrige Planetensatz- und Schaltelementmomente auf. Schließlich wird eine gute Übersetzungsreihe und gute Verzahnungswirkungsgrade erzielt.

Dabei ist das erfindungsgemäße Mehrstufengetriebe bevorzugt für den standardgemäßen Längseinbau geeignet, es ist aber auch eine Front-Querbauweise denkbar.

Zudem kann im Rahmen der Erfindung die Antriebswelle 2 durch ein Kupplungselement von einem Antriebmotor eines Kraftfahrzeuges nach Bedarf getrennt werden, wobei dieses Kupplungselement als hydrodynamischer Wandler, als hydraulische Kupplung, als trockene oder nasse Anfahrkupplung, als Magnetpulverkupplung oder als Fliehkraftkupplung gestaltet sein kann. Ferner ist es ebenso möglich, ein derartiges Anfahrelement auch hinter dem Mehrstufengetriebe anzuordnen, so dass die Antriebswelle 2 ständig mit einer Kurbelwelle des Antriebmotors verbunden ist. In beiden Fällen ist zudem die Platzierung eines Torsionsschwingungsdämpfers zwischen Motor und Getriebe denkbar.

Des Weiteren kann auf jeder der Wellen, bevorzugt auf Antriebswelle 2 und Abtriebswelle 3 bzw. 20, eine verschleißfreie Bremse, beispielsweise ein hydraulischer oder elektrischer Retarder, angeordnet sein, was insbesondere bei einem Einsatz in Nutzkraftfahrzeugen vorteilhaft ist. Zusätzlich kann jede der Wellen einen Nebenantrieb eines zusätzlichen Aggregates darstellen.

Selbstverständlich fällt auch jede konstruktive Ausbildung, insbesondere jede räumliche Anordnung der Planetensätze 4, 5, 6, 7 und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Gehäuse
- 2: Antriebswelle
- 3: Abtriebswelle
- 4: erster Planetensatz
- 5: zweiter Planetensatz
- 6: dritter Planetensatz
- 7: vierter Planetensatz
- 8: erste Bremse
- 9: zweite Bremse
- 10: dritte Bremse
- 11: erste Kupplung
- 12: zweite Kupplung
- 13: dritte Kupplung
- 14: dritte Welle
- 15: vierte Welle
- 16: fünfte Welle
- 17: sechste Welle
- 18: siebte Welle
- 19: achte Welle
- 20: Abtriebswelle
- 21: vierte Kupplung
- 22: achte Welle
- 23: vierte Welle
- 24: vierte Kupplung
- 25: achte Welle
- 26: sechste Welle
- 27: vierte Kupplung
- 28: siebte Welle

- 29: zweite Bremse
- 30: fünfte Kupplung
- 31: fünfte Kupplung

## Patentansprüche

1. Mehrstufengetriebe in Planetenbauweise, insbesondere für ein Kraftfahrzeug, mit einem Gehäuse (1), in welchem acht drehbare Wellen und vier Planetensätze (4, 5, 6, 7) aufgenommen sind, und mindestens sechs Schaltelementen, welche durch mindestens eine Bremse (8, 9, 10; 8, 9; 8, 29; 8) und Kupplungen (11, 12, 13; 11, 12, 13, 21; 11, 12, 13, 24; 11, 12, 13, 27; 11, 12, 13, 27, 30; 11, 12, 13, 27, 31) gebildet sind und mittels deren gezielter Betätigung verschiedene Übersetzungsverhältnisse zwischen einer Antriebs- (2) und einer Abtriebswelle (3; 20) darstellbar sind, **dadurch gekennzeichnet, dass** ein Steg eines ersten Planetensatzes (4) mit einer dritten Welle (14) verbunden ist, welche über eine erste Bremse (8) am Gehäuse (1) festsetzbar und ferner mittels einer ersten Kupplung (11) mit einer vierten Welle (15; 23) lösbar verbindbar ist, die des Weiteren mit einem Hohlrad eines dritten Planetensatzes (6) gekoppelt ist, wobei eine fünfte Welle (16) ein Hohlrad eines zweiten Planetensatzes (5) mit einem Sonnenrad des dritten Planetensatzes (6) verbindet und zudem über eine zweite Kupplung (12) mit der Abtriebswelle (3; 20) koppelbar ist, wobei eine sechste Welle (17; 26) mit einem Hohlrad des ersten Planetensatzes (4) verbunden ist, und wobei die Antriebswelle (2) über eine dritte Kupplung (13) mit der dritten Welle (14) verbindbar und mit einem Steg des zweiten Planetensatzes (5) gekoppelt ist.

2. Mehrstufengetriebe nach Anspruch 1, **dadurch gekennzeichnet, dass** die sechste Welle (17) zudem mit einem Sonnenrad des zweiten Planetensatzes (5) und einem Steg des dritten Planetensatzes (6) verbunden ist, wobei ein Sonnenrad des ersten Planetensatzes (4) mit einer siebten Welle (18) gekoppelt ist, die mittels einer zweiten Bremse (9) am Gehäuse (1) festsetzbar ist.

3. Mehrstufengetriebe nach Anspruch 2, **dadurch gekennzeichnet, dass** die vierte Welle (15) zudem mit einem Sonnenrad eines vierten Planetensatzes (7) verbunden ist, wobei ein Hohlrad dieses vierten Planetensatzes (7) mit einer achten Welle (19) gekoppelt ist, die über eine dritte Bremse (10) am Gehäuse (1) festsetzbar ist, und wobei die Abtriebswelle (3) des Weiteren mit einem Steg des vierten Planetensatzes (7) gekoppelt ist.

4. Mehrstufengetriebe nach Anspruch 3, **dadurch gekennzeichnet, dass** sich ein erster Vorwärtsgang durch Schließen der zweiten (9) und dritten Bremse (10), sowie der ersten Kupplung (11), ein zweiter Vorwärtsgang durch Betätigen der dritten Bremse (10), sowie der ersten (11) und dritten Kupplung (13), ein dritter Vorwärtsgang durch Schließen der zweiten (9) und dritten Bremse (10), sowie der dritten Kupplung (13), ein vierter Vorwärtsgang durch Betätigen der dritten Bremse (10), sowie der zweiten (12) und dritten Kupplung (13), ein fünfter Vorwärtsgang durch Schließen der zweiten Bremse (9), sowie der zweiten (12) und dritten Kupplung (13), ein sechster Vorwärtsgang durch Betätigen sämtlicher Kupplungen (11, 12, 13), ein siebter Vorwärtsgang durch Schließen der zweiten Bremse (9), sowie der ersten (11) und zweiten Kupplung (12), ein achter Vorwärtsgang durch Betätigen der ersten Bremse (8), sowie der ersten (11) und zweiten Kupplung (12), ein neunter Vorwärtsgang durch Schließen der ersten (8) und zweiten Bremse (9), sowie der zweiten Kupplung (12) ergibt, und wobei sich ein Rückwärtsgang durch Schließen sämtlicher Bremsen (8, 9, 10) ergibt.

5. Mehrstufengetriebe nach Anspruch 2, **dadurch gekennzeichnet, dass** die vierte Welle (15) zudem mit einem Sonnenrad eines vierten Planetensatzes (7) verbunden ist, wobei die Abtriebswelle (20) ferner über eine vierte Kupplung (21) mit einer achten Welle (22) lösbar verbindbar ist, die mit einem Steg des vierten Planetensatzes (7) gekoppelt ist, und wobei ein Hohlrad des vierten Planetensatzes (7) drehfest mit dem Gehäuse (1) verbunden ist.

6. Mehrstufengetriebe nach Anspruch 5, **dadurch gekennzeichnet, dass** sich ein erster Vorwärtsgang durch Schließen der zweiten Bremse (9), sowie der ersten (11) und vierten Kupplung (21), ein zweiter Vorwärtsgang durch Betätigen der ersten (11), dritten (13) und vierten Kupplung (21), ein dritter Vorwärtsgang durch Schließen der zweiten Bremse (9), sowie der dritten (13) und vierten Kupplung (21), ein vierter Vorwärtsgang durch Betätigen der zweiten (12), dritten (13) und vierten Kupplung (21), ein fünfter Vorwärtsgang durch Schließen der zweiten Bremse (9), sowie der zweiten (12) und dritten Kupplung (13), ein sechster Vorwärtsgang durch Betätigen der ersten (11), zweiten (12) und dritten Kupplung (13), ein siebter Vorwärtsgang durch Schließen der zweiten Bremse (9), sowie der ersten (11) und zweiten Kupplung (12), ein achter Vorwärtsgang durch Betätigen der ersten Bremse (8), sowie der ersten (11) und zweiten Kupplung (12), sowie ein neunter Vorwärtsgang durch Schließen sämtlicher Bremsen (8, 9) und der zweiten Kupplung (12) ergibt, und wobei sich ein Rückwärtsgang durch Schließen sämtlicher Bremsen (8, 9) und der vierten Kupplung (21) ergibt.

7. Mehrstufengetriebe nach Anspruch 2, **dadurch gekennzeichnet, dass** die vierte Welle (23) ferner mittels einer vierten Kupplung (24) mit einer achten Welle (25) lösbar verbindbar ist, die mit einem Sonnenrad eines vierten Planetensatzes (7) gekoppelt ist, dessen Steg mit der Abtriebswelle (3) und dessen Hohlrad drehfest mit dem Gehäuse (1) verbunden ist.

8. Mehrstufengetriebe nach Anspruch 7, **dadurch gekennzeichnet, dass** sich ein erster Vorwärtsgang durch Schließen der zweiten Bremse (9), sowie der ersten (11) und vierten Kupplung (24), ein zweiter Vorwärtsgang durch Betätigen der ersten (11), dritten (13) und vierten Kupplung (24), ein dritter Vorwärtsgang durch Schließen der zweiten Bremse (9), sowie der dritten (13) und vierten Kupplung (24), ein vierter Vorwärtsgang durch Betätigen der zweiten (12), dritten (13) und vierten Kupplung (24), ein fünfter Vorwärtsgang durch Schließen der zweiten Bremse (9), sowie der zweiten (12) und dritten Kupplung (13), ein sechster Vorwärtsgang durch Betätigen der ersten (11), zweiten (12) und dritten Kupplung (13), ein siebter Vorwärtsgang durch Schließen der zweiten Bremse (9), sowie der ersten (11) und zweiten Kupplung (12), ein achter Vorwärtsgang durch Betätigen der ersten Bremse (8), sowie der ersten (11) und zweiten Kupplung (12), sowie ein neunter Vorwärtsgang durch Schließen sämtlicher Bremsen (8, 9), sowie der zweiten Kupplung (12) ergibt, und wobei sich ein Rückwärtsgang durch Schließen sämtlicher Bremsen (8, 9) und der vierten Kupplung (24) ergibt.

9. Mehrstufengetriebe nach Anspruch 1, **dadurch gekennzeichnet, dass** die sechste Welle (26) zudem mittels einer vierten Kupplung (27) mit einer siebten Welle (28) verbindbar ist, die des Weiteren ein Sonnenrad des zweiten Planetensatzes (5) mit einem Steg des dritten Planetensatzes (6) verbindet, wobei ein Sonnenrad des ersten Planetensatzes (4) drehfest mit dem Gehäuse (1) gekoppelt ist.

10. Mehrstufengetriebe nach Anspruch 9, **dadurch gekennzeichnet, dass** die vierte Welle (15) ferner mit einem Sonnenrad eines vierten Planetensatzes (7) verbunden ist, wobei ein Steg dieses vierten Planetensatzes (7) mit der Abtriebswelle (3) und ein Hohlrad des vierten Planetensatzes (7) mit einer achten Welle (19) gekoppelt ist, die über eine zweite Bremse (29) am Gehäuse (1) festsetzbar ist.

11. Mehrstufengetriebe nach Anspruch 10, **dadurch gekennzeichnet, dass** sich ein erster Vorwärtsgang durch Schließen der zweiten Bremse (29), sowie der ersten (11) und vierten Kupplung (27), ein zweiter Vorwärtsgang durch Betätigen der zweiten Bremse (29), sowie der ersten (11) und dritten (13) Kupplung, ein dritter Vorwärtsgang durch Schließen der zweiten Bremse (29), sowie der dritten (13) und vierten Kupplung (27), ein vierter Vorwärtsgang durch Betätigen der zweiten Bremse (29), sowie der zweiten (12) und dritten Kupplung (13), ein fünfter Vorwärtsgang durch Schließen der zweiten (12), dritten (13) und vierten Kupplung (27), ein sechster Vorwärtsgang durch Betätigen der ersten (11), zweiten (12) und dritten Kupplung (13), ein siebter Vorwärtsgang durch Schließen der ersten (11), zweiten (12) und vierten (27) Kupplung, ein achter Vorwärtsgang durch Betätigen der ersten Bremse (8), sowie der ersten (11) und zweiten Kupplung (12), sowie ein neunter Vorwärtsgang durch Schließen der ersten Bremse (8), sowie der zweiten (12) und vierten Kupplung (27) ergibt, und wobei sich ein Rückwärtsgang durch Schließen sämtlicher Bremsen (8, 29), sowie der vierten Kupplung (27) ergibt.

12. Mehrstufengetriebe nach Anspruch 9, **dadurch gekennzeichnet, dass** die vierte Welle (15) ferner mit einem Sonnenrad eines vierten Planetensatzes (7) verbunden ist, wobei ein Steg dieses vierten Planetensatzes (7) mit einer achten Welle (22) gekoppelt ist, die über eine fünfte Kupplung (30) mit der Abtriebswelle (20) verbindbar ist, und wobei ein Hohlrad des vierten Planetensatzes (7) drehfest mit dem Gehäuse (1) gekoppelt ist.

13. Mehrstufengetriebe nach Anspruch 12, **dadurch gekennzeichnet, dass** sich ein erster Vorwärtsgang durch Schließen der ersten (11), vierten (27) und fünften Kupplung (30), ein zweiter Vorwärtsgang durch Betätigen der ersten (11), dritten (13) und fünften Kupplung (30), ein dritter Vorwärtsgang durch Schließen der dritten (13), vierten (27) und fünften Kupplung (30), ein vierter Vorwärtsgang durch Betätigen der zweiten (12), dritten (13) und fünften Kupplung (30), ein fünfter Vorwärtsgang durch Schließen der zweiten (12), dritten (13) und vierten Kupplung (27), ein sechster Vorwärtsgang durch Betätigen der ersten (11), zweiten (12) und dritten Kupplung (13), ein siebter Vorwärtsgang durch Schließen der ersten (11), zweiten (12) und vierten Kupplung (27), ein achter Vorwärtsgang durch Betätigen der ersten Bremse (8), sowie der ersten (11) und zweiten Kupplung (12), sowie ein neunter Vorwärtsgang durch Schließen der ersten Bremse (8), sowie der zweiten (12) und vierten Kupplung (27) ergibt, und wobei sich ein Rückwärtsgang durch Schließen der ersten Bremse (8), sowie der vierten (27) und fünften Kupplung (30) ergibt.

14. Mehrstufengetriebe nach Anspruch 9, **dadurch gekennzeichnet, dass** die vierte Welle (23) ferner mittels einer fünften Kupplung (31) mit einer achten Welle (25) verbindbar ist, die mit einem Sonnenrad eines vierten Planetensatzes (7) gekoppelt ist, wobei ein Steg dieses vierten Planetensatzes (7) mit der Abtriebswelle (3) und ein Hohlrad des vierten Planetensatzes (7) drehfest mit dem Gehäuse (1) verbunden ist.

15. Mehrstufengetriebe nach Anspruch 14, **dadurch gekennzeichnet, dass** sich ein erster Vorwärtsgang durch Schließen der ersten (11), vierten (27) und fünften Kupplung (31), ein zweiter Vorwärtsgang durch Betätigen der ersten (11), dritten (13) und fünften Kupplung (31), ein dritter Vorwärtsgang durch Schließen der dritten (13), vierten (27) und fünften Kupplung (31), ein vierter Vorwärtsgang durch Betätigen der zweiten (12), dritten (13) und fünften Kupplung (31), ein fünfter Vorwärtsgang durch Schließen der zweiten (12), dritten (13) und vierten Kupplung (27), ein sechster Vorwärtsgang durch Betätigen der ersten (11), zweiten (12) und dritten Kupplung (13), ein siebter Vorwärtsgang durch Schließen der ersten (11), zweiten (12) und vierten Kupplung (27), ein achter Vorwärtsgang durch Betätigen der ersten Bremse (8), sowie der ersten (11) und zweiten Kupplung (12), sowie ein neunter Vorwärtsgang durch Schließen der ersten Bremse (8), sowie der zweiten (12) und vierten Kupplung (27) ergibt, und wobei sich ein Rückwärtsgang durch Schließen der ersten Bremse (8), sowie der vierten (27) und fünften Kupplung (31) ergibt.

16. Mehrstufengetriebe nach einem der vorhergehenden Ansprüche, **dadurch gekennzeichnet, dass** mindestens ein Planetenradsatz als Minus-Planetensatz ausgebildet ist.

## Claims

1. Multistep gear mechanism of planetary design, in particular for a motor vehicle, having a housing (1), in which eight rotatable shafts and four planetary sets (4, 5, 6, 7) are received, and at least six shifting elements which are formed by at least one brake (8, 9, 10; 8, 9; 8, 29; 8) and clutches (11, 12, 13; 11, 12, 13, 21; 11, 12, 13, 24; 11, 12, 13, 27; 11, 12, 13, 27, 30; 11, 12, 13, 27, 31) and by means of the targeted actuation of which different transmission ratios can be produced between a drive shaft (2) and an output shaft (3; 20), **characterized in that** a spider of a first planetary set (4) is connected to a third shaft (14) which can be fixed on the housing (1) via a first brake (8) and, furthermore, can be connected releasably by means of a first clutch (11) to a fourth shaft (15; 23) which is coupled, furthermore, to an internal gear of a third planetary set (6), a fifth shaft (16) connecting an internal gear of a second planetary set (5) to a sun gear of the third planetary set (6) and, in addition, being capable of being coupled via a second clutch (12) to the output shaft (3; 20), a sixth shaft (17; 26) being connected to an internal gear of the first planetary set (4), and the drive shaft (2) being capable of being connected via a third clutch (13) to the third shaft (14) and being coupled to a spider of the second planetary set (5).

2. Multistep gear mechanism according to Claim 1, **characterized in that**, in addition, the sixth shaft (17) is connected to a sun gear of the second planetary set (5) and a spider of the third planetary set (6), a sun gear of the first planetary set (4) being coupled to a seventh shaft (18) which can be fixed on the housing (1) by means of a second brake (9).

3. Multistep gear mechanism according to Claim 2, **characterized in that**, in addition, the fourth shaft (15) is connected to a sun gear of a fourth planetary set (7), an internal gear of the said fourth planetary set (7) being coupled to an eighth shaft (19) which can be fixed on the housing (1) via a third brake (10), and, furthermore, the output shaft (3) being coupled to a spider of the fourth planetary set (7).

4. Multistep gear mechanism according to Claim 3, **characterized in that** a first forward gear results from closure of the second (9) and third brake (10) and of the first clutch (11), a second forward gear results from actuation of the third brake (10) and of the first (11) and third clutch (13), a third forward gear results from closure of the second (9) and third brake (10) and of the third clutch (13), a fourth forward gear results from actuation of the third brake (10) and of the second (12) and third clutch (13), a fifth forward gear results from closure of the second brake (9) and of the second (12) and third clutch (13), a sixth forward gear results from actuation of all the clutches (11, 12, 13), a seventh forward gear results from closure of the second brake (9) and of the first (11) and second clutch (12), an eighth forward gear results from actuation of the first brake (8) and of the first (11) and second clutch (12), a ninth forward gear results from closure of the first (8) and second brake (9) and of the second clutch (12), and a reverse gear resulting from closure of all the brakes (8, 9, 10).

5. Multistep gear mechanism according to Claim 2, **characterized in that**, in addition, the fourth shaft (15) is connected to a sun gear of a fourth planetary set (7), the output shaft (20) being capable, furthermore, of being connected releasably via a fourth clutch (21) to an eighth shaft (22) which is coupled to a spider of the fourth planetary set (7), and an internal gear of the fourth planetary set (7) being connected fixedly to the housing (1) so as to rotate with it.

6. Multistep gear mechanism according to Claim 5, **characterized in that** a first forward gear results from closure of the second brake (9) and of the first (11) and fourth clutch (21), a second forward gear results from actuation of the first (11), third (13) and fourth clutch (21), a third forward gear results from closure of the second brake (9) and of the third (13) and fourth clutch (21), a fourth forward gear results from actuation of the second (12), third (13) and fourth clutch (21), a fifth forward gear results from closure of the second brake (9) and of the second (12) and third clutch (13), a sixth forward gear results from actuation of the first (11), second (12) and third clutch (13), a seventh forward gear results from closure of the second brake (9) and of the first (11) and second clutch (12), an eighth forward gear results from actuation of the first brake (8) and of the first (11) and second clutch (12), and a ninth forward gear results from closure of all the brakes (8, 9) and of the second clutch (12), and a reverse gear resulting from closure of all the brakes (8, 9) and of the fourth clutch (21).

7. Multistep gear mechanism according to Claim 2, **characterized in that**, furthermore, the fourth shaft (23) can be connected releasably by means of a fourth clutch (24) to an eighth shaft (25) which is coupled to a sun gear of a fourth planetary set (7), the spider of which is connected to the output shaft (3) and the internal gear of which is connected fixedly to the housing (1) so as to rotate with it.

8. Multistep gear mechanism according to Claim 7, **characterized in that** a first forward gear results from closure of the second brake (9) and of the first (11) and fourth clutch (24), a second forward gear results from actuation of the first (11), third (13) and fourth clutch (24), a third forward gear results from closure of the second brake (9) and of the third (13) and fourth clutch (24), a fourth forward gear results from actuation of the second (12), third (13) and fourth clutch (24), a fifth forward gear results from closure of the second brake (9) and of the second (12) and third clutch (13), a sixth forward gear results from actuation of the first (11), second (12) and third clutch (13), a seventh forward gear results from closure of the second brake (9) and of the first (11) and second clutch (12), an eighth forward gear results from actuation of the first brake (8) and of the first (11) and second clutch (12), and a ninth forward gear results from closure of all the brakes (8, 9) and of the second clutch (12), and a reverse gear resulting from closure of all the brakes (8, 9) and of the fourth clutch (24).

9. Multistep gear mechanism according to Claim 1, **characterized in that**, in addition, the sixth shaft (26) can be connected by means of a fourth clutch (27) to a seventh shaft (28) which, furthermore, connects a sun gear of the second planetary set (5) to a spider of the third planetary set (6), a sun gear of the first planetary set (4) being coupled fixedly to the housing (1) so as to rotate with it.

10. Multistep gear mechanism according to Claim 9, **characterized in that**, furthermore, the fourth shaft (15) is connected to a sun gear of a fourth planetary set (7), a spider of the said fourth planetary set (7) being coupled to the output shaft (3) and an internal gear of the fourth planetary set (7) being coupled to an eighth shaft (19) which can be fixed on the housing (1) via a second brake (29).

11. Multistep gear mechanism according to Claim 10, **characterized in that** a first forward gear results from closure of the second brake (29) and of the first (11) and fourth clutch (27), a second forward gear results from actuation of the second brake (29) and of the first (11) and third clutch (13), a third forward gear results from closure of the second brake (29) and of the third (13) and fourth clutch (27), a fourth forward gear results from actuation of the second brake (29) and of the second (12) and third clutch (13), a fifth forward gear results from closure of the second (12), third (13) and fourth clutch (27), a sixth forward gear results from actuation of the first (11), second (12) and third clutch (13), a seventh forward gear results from closure of the first (11), second (12) and fourth clutch (27), an eighth forward gear results from actuation of the first brake (8) and of the first (11) and second clutch (12), and a ninth forward gear results from closure of the first brake (8) and of the second (12) and fourth clutch (27), and a reverse gear resulting from closure of all the brakes (8, 29) and of the fourth clutch (27).

12. Multistep gear mechanism according to Claim 9, **characterized in that**, furthermore, the fourth shaft (15) is connected to a sun gear of a fourth planetary set (7), a spider of the said fourth planetary set (7) being coupled to an eighth shaft (22) which can be connected via a fifth clutch (30) to the output shaft (20), and an internal gear of the fourth planetary set (7) being coupled fixedly to the housing (1) so as to rotate with it.

13. Multistep gear mechanism according to Claim 12, **characterized in that** a first forward gear results from closure of the first (11), fourth (27) and fifth clutch (30), a second forward gear results from actuation of the first (11), third (13) and fifth clutch (30), a third forward gear results from closure of the third (13), fourth (27) and fifth clutch (30), a fourth forward gear results from actuation of the second (12), third (13) and fifth clutch (30), a fifth forward gear results from closure of the second (12), third (13) and fourth clutch (27), a sixth forward gear results from actuation of the first (11), second (12) and third clutch (13), a seventh forward gear results from closure of the first (11), second (12) and fourth clutch (27), an eighth forward gear results from actuation of the first brake (8) and of the first (11) and second clutch (12), and a ninth forward gear results from closure of the first brake (8) and of the second (12) and fourth clutch (27), and a reverse gear resulting from closure of the first brake (8) and of the fourth (27) and fifth clutch (30).

14. Multistep gear mechanism according to Claim 9, **characterized in that**, furthermore, the fourth shaft (23) can be connected by means of a fifth clutch (31) to an eighth shaft (25) which is coupled to a sun gear of a fourth planetary set (7), a spider of the said fourth planetary set (7) being connected to the output shaft (3) and an internal gear of the fourth planetary set (7) being connected fixedly to the housing (1) so as to rotate with it.

15. Multistep gear mechanism according to Claim 14, **characterized in that** a first forward gear results from closure of the first (11), fourth (27) and fifth clutch (31), a second forward gear results from actuation of the first (11), third (13) and fifth clutch (31), a third forward gear results from closure of the third (13), fourth (27) and fifth clutch (31), a fourth forward gear results from actuation of the second (12), third (13) and fifth clutch (31), a fifth forward gear results from closure of the second (12), third (13) and fourth clutch (27), a sixth forward gear results from actuation of the first (11), second (12) and third clutch (13), a seventh forward gear results from closure of the first (11), second (12) and fourth clutch (27), an eighth forward gear results from actuation of the first brake (8) and of the first (11) and the second clutch (12), and a ninth forward gear results from closure of the first brake (8) and of the second (12) and fourth clutch (27), and a reverse gear resulting from closure of the first brake (8) and of the fourth (27) and fifth clutch (31).

16. Multistep gear mechanism according to one of the preceding claims, **characterized in that** at least one planetary gear set is configured as a negative planetary set.

## Revendications

1. Boîte de vitesses multiétagée de construction planétaire, en particulier pour un véhicule automobile, comprenant un boîtier (1) dans lequel sont reçus huit arbres rotatifs et quatre trains planétaires (4, 5, 6, 7), et au moins six éléments de commutation, lesquels sont formés par au moins un frein (8, 9, 10 ; 8, 9 ; 8, 29 ; 8) et des embrayages (11, 12, 13 ; 11, 12, 13, 21 ; 11, 12, 13, 24 ; 11, 12, 13, 27 ; 11, 12, 13, 27, 30 ; 11, 12, 13, 27, 31) et par l'actionnement ciblé desquels différents rapports de transmission entre un arbre d'entraînement (2) et un arbre de sortie (3 ; 20) peuvent être réalisés, **caractérisée en ce qu'**un porte-satellites d'un premier train planétaire (4) est relié à un troisième arbre (14) qui peut être fixé sur le boîtier (1) par le biais d'un premier frein (8) et qui peut de plus être relié de manière amovible à un quatrième arbre (15 ; 23) au moyen d'un premier embrayage (11), lequel quatrième arbre est en outre accouplé à une couronne dentée d'un troisième train planétaire (6), un cinquième arbre (16) reliant une couronne dentée d'un deuxième train planétaire (5) à une roue solaire du troisième train planétaire (6) et pouvant en outre être accouplé à l'arbre de sortie (3 ; 20) par le biais d'un deuxième embrayage (12), un sixième arbre (17 ; 26) étant relié à une couronne dentée du premier train planétaire (4), et l'arbre d'entraînement (2) pouvant être relié au troisième arbre (14) par le biais d'un troisième embrayage (13) et étant accouplé à un porte-satellites du deuxième train planétaire (5).

2. Boîte de vitesses multiétagée selon la revendication 1, **caractérisée en ce que** le sixième arbre (17) est en outre relié à une roue solaire du deuxième train planétaire (5) et à un porte-satellites du troisième train planétaire (6), une roue solaire du premier train planétaire (4) étant accouplée à un septième arbre (18) qui peut être fixé sur le boîtier (1) au moyen d'un deuxième frein (9).

3. Boîte de vitesses multiétagée selon la revendication 2, **caractérisée en ce que** le quatrième arbre (15) est de plus relié à une roue solaire d'un quatrième train planétaire (7), une couronne dentée de ce quatrième train planétaire (7) étant accouplée à un huitième arbre (19), lequel peut être fixé sur le boîtier (1) au moyen d'un troisième frein (10), et l'arbre de sortie (3) étant en outre accouplé à un porte-satellites du quatrième train planétaire (7).

4. Boîte de vitesses multiétagée selon la revendication 3, **caractérisée en ce qu'**un premier rapport de marche avant s'obtient par fermeture du deuxième (9) et du troisième frein (10), ainsi que du premier embrayage (11), un deuxième rapport de marche avant s'obtient par actionnement du troisième frein (10), ainsi que du premier (11) et du troisième embrayage (13), un troisième rapport de marche avant s'obtient par fermeture du deuxième (9) et du troisième frein (10), ainsi que du troisième embrayage (13), un quatrième rapport de marche avant s'obtient par actionnement du troisième frein (10), ainsi que du deuxième (12) et du troisième embrayage (13), un cinquième rapport de marche avant s'obtient par fermeture du deuxième frein (9), ainsi que du deuxième (12) et du troisième embrayage (13), un sixième rapport de marche avant s'obtient par actionnement de tous les embrayages (11, 12, 13), un septième rapport de marche avant s'obtient par fermeture du deuxième frein (9), ainsi que du premier (11) et du deuxième embrayage (12), un huitième rapport de marche avant s'obtient par actionnement du premier frein (8), ainsi que du premier (11) et du deuxième embrayage (12), un neuvième rapport de marche avant s'obtient par fermeture du premier (8) et du deuxième frein (9), ainsi que du deuxième embrayage (12), et un rapport de marche arrière s'obtenant par fermeture de tous les freins (8, 9, 10).

5. Boîte de vitesses multiétagée selon la revendication 2, **caractérisée en ce que** le quatrième arbre (15) est de plus relié à une roue solaire d'un quatrième train planétaire (7), l'arbre de sortie (20) pouvant de plus être accouplé de manière amovible à un huitième arbre (22) par le biais d'un quatrième embrayage (21), lequel huitième arbre est accouplé à un porte-satellites du quatrième train planétaire (7), et une couronne dentée du quatrième train planétaire (7) étant reliée de manière solidaire en rotation au boîtier (1).

6. Boîte de vitesses multiétagée selon la revendication 5, **caractérisée en ce qu'**un premier rapport de marche avant s'obtient par fermeture du deuxième frein (9), ainsi que du premier (11) et du quatrième embrayage (21), un deuxième rapport de marche avant s'obtient par actionnement du premier (11), du troisième (13) et du quatrième embrayage (21), un troisième rapport de marche avant s'obtient par fermeture du deuxième frein (9), ainsi que du troisième (13) et du quatrième embrayage (21), un quatrième rapport de marche avant s'obtient par actionnement du deuxième (12), du troisième (13) et du quatrième embrayage (21), un cinquième rapport de marche avant s'obtient par fermeture du deuxième frein (9), ainsi que du deuxième (12) et du troisième embrayage (13), un sixième rapport de marche avant s'obtient par actionnement du premier (11), du deuxième (12) et du troisième embrayage (13), un septième rapport de marche avant s'obtient par fermeture du deuxième frein (9), ainsi que du premier (11) et du deuxième embrayage (12), un huitième rapport de marche avant s'obtient par actionnement du premier frein (8), ainsi que du premier (11) et du deuxième embrayage (12), et un neuvième rapport de marche avant s'obtient par fermeture de tous les freins (8, 9) et du deuxième embrayage (12), et un rapport de marche arrière s'obtenant par fermeture de tous les freins (8, 9) et du quatrième embrayage (21).

7. Boîte de vitesses multiétagée selon la revendication 2, **caractérisée en ce que** le quatrième arbre (23) peut en outre être relié de manière amovible à un huitième arbre (25) au moyen d'un quatrième embrayage (24), lequel huitième arbre est accouplé à une roue solaire d'un quatrième train planétaire (7) dont le porte-satellites est relié à l'arbre de sortie (3) et dont la couronne dentée est reliée de manière solidaire en rotation au boîtier (1).

8. Boîte de vitesses multiétagée selon la revendication 7, **caractérisée en ce qu'**un premier rapport de marche avant s'obtient par fermeture du deuxième frein (9), ainsi que du premier (11) et du quatrième embrayage (24), un deuxième rapport de marche avant s'obtient par actionnement du premier (11), du troisième (13) et du quatrième embrayage (24), un troisième rapport de marche avant s'obtient par fermeture du deuxième frein (9), ainsi que du troisième (13) et du quatrième embrayage (24), un quatrième rapport de marche avant s'obtient par actionnement du deuxième (12), du troisième (13) et du quatrième embrayage (24), un cinquième rapport de marche avant s'obtient par fermeture du deuxième frein (9), ainsi que du deuxième (12) et du troisième embrayage (13), un sixième rapport de marche avant s'obtient par actionnement du premier (11), du deuxième (12) et du troisième embrayage (13), un septième rapport de marche avant s'obtient par fermeture du deuxième frein (9), ainsi que du premier (11) et du deuxième embrayage (12), un huitième rapport de marche avant s'obtient par actionnement du premier frein (8), ainsi que du premier (11) et du deuxième embrayage (12), et un neuvième rapport de marche avant s'obtient par fermeture de tous les freins (8, 9) ainsi que du deuxième embrayage (12), et un rapport de marche arrière s'obtenant par fermeture de tous les freins (8, 9) et du quatrième embrayage (24).

9. Boîte de vitesses multiétagée selon la revendication 1, **caractérisée en ce que** le sixième arbre (26) peut en outre être relié à un septième arbre (28) au moyen d'un quatrième embrayage (27), lequel septième arbre relie en outre une roue solaire du deuxième train planétaire (5) à un porte-satellites du troisième train planétaire (6), une roue solaire du premier train planétaire (4) étant accouplée de manière solidaire en rotation au boîtier (1).

10. Boîte de vitesses multiétagée selon la revendication 9, **caractérisée en ce que** le quatrième arbre (15) est en outre relié à une roue solaire d'un quatrième train planétaire (7), un porte-satellites de ce quatrième planétaire (7) étant accouplé à l'arbre de sortie (3) et une couronne dentée du quatrième train planétaire (7) étant accouplée à un huitième arbre (19) qui peut être fixé sur le boîtier (1) par le biais d'un deuxième frein (29).

11. Boîte de vitesses multiétagée selon la revendication 10, **caractérisée en ce qu'**un premier rapport de marche avant s'obtient par fermeture du deuxième frein (29), ainsi que du premier (11) et du quatrième embrayage (27), un deuxième rapport de marche avant s'obtient par actionnement du deuxième frein (29), ainsi que du premier (11) et du troisième embrayage (13), un troisième rapport de marche avant s'obtient par fermeture du deuxième frein (29), ainsi que du troisième (13) et du quatrième embrayage (27), un quatrième rapport de marche avant s'obtient par actionnement du deuxième frein (29), ainsi que du deuxième (12) et du troisième embrayage (13), un cinquième rapport de marche avant s'obtient par fermeture du deuxième (12), du troisième (13) et du quatrième embrayage (27), un sixième rapport de marche avant s'obtient par actionnement du premier (11), du deuxième (12) et du troisième embrayage (13), un septième rapport de marche avant s'obtient par fermeture du premier (11), du deuxième (12) et du quatrième (27) embrayage, un huitième rapport de marche avant s'obtient par actionnement du premier frein (8), ainsi que du premier (11) et du deuxième embrayage (12), et un neuvième rapport de marche avant s'obtient par fermeture du premier frein (8), ainsi que du deuxième (12) et du quatrième embrayage (27), et un rapport de marche arrière s'obtenant par fermeture de tous les freins (8, 29) ainsi que du quatrième embrayage (27).

12. Boîte de vitesses multiétagée selon la revendication 9, **caractérisée en ce que** le quatrième arbre (15) est de plus relié à une roue solaire d'un quatrième train planétaire (7), un porte-satellites de ce quatrième train planétaire (7) étant accouplé à un huitième arbre (22) qui peut être relié à l'arbre de sortie (20) par le biais d'un cinquième embrayage (30), et une couronne dentée du quatrième train planétaire (7) étant accouplée de manière solidaire en rotation au boîtier (1).

13. Boîte de vitesses multiétagée selon la revendication 12, **caractérisée en ce qu'**un premier rapport de marche avant s'obtient par fermeture du premier (11), du quatrième (27) et du cinquième embrayage (30), un deuxième rapport de marche avant s'obtient par actionnement du premier (11), du troisième (13) et du cinquième embrayage (30), un troisième rapport de marche avant s'obtient par fermeture du troisième (13), du quatrième (27) et du cinquième embrayage (30), un quatrième rapport de marche avant s'obtient par actionnement du deuxième (12), du troisième (13) et du cinquième embrayage (30), un cinquième rapport de marche avant s'obtient par fermeture du deuxième (12), du troisième (13) et du quatrième embrayage (27), un sixième rapport de marche avant s'obtient par actionnement du premier (11), du deuxième (12) et du troisième embrayage (13), un septième rapport de marche avant s'obtient par fermeture du premier (11), du deuxième (12) et du quatrième embrayage (27), un huitième rapport de marche avant s'obtient par actionnement du premier frein (8), ainsi que du premier (11) et du deuxième embrayage (12), et un neuvième rapport de marche avant s'obtient par fermeture du premier frein (8), ainsi que du deuxième (12) et du quatrième embrayage (27), et un rapport de marche arrière s'obtenant par fermeture du premier frein (8) ainsi que du quatrième (27) et du cinquième embrayage (30).

14. Boîte de vitesses multiétagée selon la revendication 9, **caractérisée en ce que** le quatrième arbre (23) peut en outre être relié à un huitième arbre (25) au moyen d'un cinquième embrayage (31), lequel huitième arbre est accouplé à une roue solaire d'un quatrième train planétaire (7), un porte-satellites de ce quatrième train planétaire (7) étant relié à l'arbre de sortie (3) et une couronne dentée du quatrième train planétaire (7) étant reliée de manière solidaire en rotation au boîtier (1).

15. Boîte de vitesses multiétagée selon la revendication 14, **caractérisée en ce qu'**un premier rapport de marche avant s'obtient par fermeture du premier (11), du quatrième (27) et du cinquième embrayage (31), un deuxième rapport de marche avant s'obtient par actionnement du premier (11), du troisième (13) et du cinquième embrayage (31), un troisième rapport de marche avant s'obtient par fermeture du troisième (13), du quatrième (27) et du cinquième embrayage (31), un quatrième rapport de marche avant s'obtient par actionnement du deuxième (12), du troisième (13) et du cinquième embrayage (31), un cinquième rapport de marche avant s'obtient par fermeture du deuxième (12), du troisième (13) et du quatrième embrayage (27), un sixième rapport de marche avant s'obtient par actionnement du premier (11), du deuxième (12) et du troisième embrayage (13), un septième rapport de marche avant s'obtient par fermeture du premier (11), du deuxième (12) et du quatrième embrayage (27), un huitième rapport de marche avant s'obtient par actionnement du premier frein (8), ainsi que du premier (11) et du deuxième embrayage (12), et un neuvième rapport de marche avant s'obtient par fermeture du premier frein (8), ainsi que du deuxième (12) et du quatrième embrayage (27), et un rapport de marche arrière s'obtenant par fermeture du premier frein (8) ainsi que du quatrième (27) et du cinquième embrayage (31).

16. Boîte de vitesses multiétagée selon l'une quelconque des revendications précédentes, **caractérisée en ce qu'**au moins un train planétaire est réalisé sous forme de train planétaire négatif.
